# EUROPEAN PATENT SPECIFICATION

(11) **EP 4 509 843 B1**
(45) Date of publication and mention of the grant of the patent: **12.08.2026**
(21) Application number: 24212897.3
(22) Date of filing: 16.12.2019
(51) Int. Cl.: G01P 15/08, G01P 1/02, G01P 15/09, G01P 15/125

(54) **IMPACT DETECTION SENSOR FOR A VEHICLE**
AUFPRALLERKENNUNGSSENSOR FÜR EIN FAHRZEUG
CAPTEUR DE DÉTECTION D'IMPACT POUR UN VÉHICULE

(43) Date of publication of application: 19.02.2025
(62) Document number(s) of the earlier application(s) in accordance with Art. 76 EPC: 19216379.8 / 3 838 687
(73) Proprietor: Veoneer Sweden Safety Systems AB, 10302 Stockholm (SE)
(72) Inventor: HÖFELSAUER, Herbert, 85716 Unterschleißheim (DE)
(74) Representative: Reichert & Lindner Partnerschaft Patentanwälte

(56) References cited:
- EP-A1- 1 535 805
- EP-A1- 1 710 598
- WO-A1-03/082639
- JP-A- 2000 177 514

## Description

### Field of the Invention

The invention relates to an impact detection sensor for a vehicle, wherein the sensor defines an axis.

### Description of the Background Art

The European Patent EP 2 709 877 B1 relates to a motor vehicle comprising a fender provided at the front and the rear and at least one sensor device, which has a capacitively operating sensor. The sensor device has an associated control device for collision detection, wherein the sensor is arranged on a fender. The sensor is formed as a surface sensor which extends over at least half the width of the fender. The control device can determine information resulting from a collision with an object by using the capacitance of the sensor, which changes as a result of collision-induced deformation of the sensor.

WO 03/082639 A1 describes an impact detector for detecting and evaluating an impact and generating an output signal to deploy a pedestrian protection system on a motor vehicle. The impact detector includes a sensor arrangement to be mounted at the front of the vehicle to detect an impact. For this purpose, a contact sensor and an independent force sensor in the form of a piezo-cable divided into several small segments are incorporated into a foam.

An evaluator is provided to evaluate the output of the sensor and to generate an output signal when a predetermined threshold is exceeded, so that the pedestrian protection system is not actuated by an impact with a very light object. In addition, a chassis-mounted accelerometer is provided to provide a signal indicative of the total deceleration applied to the vehicle. An inhibitor is provided to inhibit generation of the signal that actuates the pedestrian protection system, if the output signal from the accelerometer exceeds a predetermined threshold.

JP 2000 177514 A discloses a collision discriminating device for a vehicle comprising a collision detecting means for detecting the collision based on the deformation of a collided surface of vehicle. The collision detecting means is formed by an electrostatic capacity-type collision detecting sensor part formed by counter electrodes mounted on the collision surface at specific intervals and a dielectric formed by an elastic member inserted between the counter electrodes. EP 1 535 805 A1 discloses an impact sensing device. A sealed chamber, filled with a pressure medium, is provided. At least one surface acoustic wave device is associated to said sealed chamber for sensing a pressure inside said pressure chamber. The sealed chamber is designed to be arranged in a vehicle at a location where an impact during a collision situation is to be sensed. The surface acoustic wave device includes at least one surface acoustic wave resonator and an antenna for remotely communicating with a control unit arranged within said vehicle.

US Patent US 9,650,013 B1 relates to a pedestrian protection system for a vehicle. The protection system having at least one impact-detecting sensor and a deformable element that are arranged between a cross-member and a bumper cover of the vehicle. A control unit is provided for analysing the signals of the at least one sensor. To reduce the amount of space required, the deformable element is designed as a deformable member that has a cavity in which the at least one sensor is arranged and the at least one sensor detects changes in an electromagnetic field in the cavity.

### Summary of the invention

It is therefore an object of the present invention to provide a sensor for impact detection for a vehicle which allows the detection of the location of an impact, provides impact recognition, has redundancy, and allows a simplified integration in a vehicle.

The above object is achieved by a sensor for impact detection and protection system which comprises the features of claim 1.

According to an inventive embodiment an impact detection sensor for a vehicle is disclosed. The impact detection sensor has a sensor element of a first type, which is a capacitive sensor, oriented along the axis of the impact detection sensor and being connected to a first amplifier. A plurality of sensor elements, which are piezoelectric sensor elements, force sensitive sensor elements or accelerometers, of a second type is provided, which are oriented and uniformly distributed along the axis of the impact detection sensor. The plurality of sensor elements of a second type is connected in pairs to a second amplifier. A carrier comprises a first foam element and a second foam element, wherein the sensor element of the first type and the plurality of sensor elements of the second type are sandwiched between the first foam element and the second foam element. The sensor element of the first type is supported by the second foam element of the carrier and wherein a wiring for the sensor elements of the second type is as well arranged between the first foam element and the second foam element. A housing of the impact detection sensor 1 encloses a printed circuit board, which encompasses the first amplifier, which is electrically connected by the wiring to the sensor element, and the second amplifier, which is electrically connected by the wiring to the plurality of sensor elements.

The advantage of the two different types of sensor elements is a redundancy, wherein both sensor types are integrated in one impact detection sensor. Furthermore, the impact detection sensor allows the determination of location of the impact at the front side of the vehicle. The impact location can be achieved by the at least one sensor element of the first type and/or the plurality of sensor elements of the second type.

According to one embodiment of the invention, the plurality of sensor elements of the second type can be a mixture of the piezoelectric sensor elements, force sensitive sensor elements or accelerometers.

According to one preferred embodiment of the invention the plurality of sensor elements of the second type of the impact detection sensor are piezoelectric sensor elements.

According to a preferred embodiment, the plurality of sensor elements of the second type encompasses eight sensor elements of the second type.

For the collection of signals from the at least one sensor element of the first type, the at least one sensor element is electrically connected by a wiring to a first amplifier. According to a preferred embodiment the sensor comprises one single capacitive sensor, which is connected to the first amplifier. The operating mode of the at least one capacitive sensor is that an impact causes a distance change of the two electrodes of the capacitive sensor. The change in distance of the electrodes results in a capacitive change, which is amplified and used for the verification of the impact.

According to a preferred embodiment the sensor comprises for example eight sensor elements of the second type (piezoelectric sensor elements). The eight piezoelectric sensor elements are connected to eight channels of the second amplifier by an individual wiring.

According to another possible embodiment of the invention two of the plurality of sensor elements of the second type are commonly connected by a wiring to the second amplifier. Consequently, the second amplifier has four channels to which the eight piezoelectric sensor elements are connected in pairs.

According to one embodiment, the pairing of the eight piezoelectric sensor elements is such that the first and the third piezoelectric sensor elements are connected to the first channel, the second and the fifth piezoelectric sensor elements are connected to the second channel, the fourth and the seventh piezoelectric sensor elements are connected to the third channel and the sixth and the eighth piezoelectric sensor elements are connected to the fourth channel. The advantage of this embodiment is the minimum wiring for the capacitive sensor element and a location resolution between the left, the right and the middle of the sensor.

According to a further embodiment, the pairing of the eight piezoelectric sensor elements is such that the first and the eighth piezo electric sensor elements are connected to the first channel, the second and the seventh piezoelectric sensor elements are connected to the second channel, the third and the sixth piezoelectric sensor elements are connected to the third channel and the fourth and the fifth piezoelectric sensor elements are connected to the fourth channel. The advantage of this embodiment is the minimum wiring for the capacitive sensor element and symmetric areas on the left and the right of the sensor.

According to an embodiment of the invention the impact detection sensor is enclosed in a sealing. One end of the sealing is a welded end. The opposite end of the sealing of the impact detection sensor is attached to a housing. This arrangement allows an easy and definite instalment of the impact detection sensor in a vehicle.

According to a further embodiment the amplifiers for the one capacitive sensor element and the amplifier for the eight piezoelectric sensor elements, respectively, are combined in one printed circuit board. The printed circuit board is provided at one end of the impact detection sensor. The advantage of this arrangement is a simplification of the wiring to the amplifier for the capacitive sensor element and the amplifier for piezoelectric sensor elements. As mentioned above the arrangement of the piezoelectric sensor elements provides a location resolution of the location of impact. According to a further embodiment, all the piezoelectric sensor elements of the sensor can be connected to ground potential.

To use the inventive impact detection sensor in the field, a carrier for the sensor is provided. According to one potential embodiment, the sensor is enclosed within the carrier. The carrier is deformable by an impacting object (for example a pedestrian). The impact causes a deformation, and an electrical signal is generated from the at least one sensor element of the first type and/or the plurality of sensor elements of the second type.

According to one embodiment of the invention the carrier has a specific structure. At least the first foam element, being essentially perpendicular to the direction of driving and is deformable by the impact of the object. The impact causes a deformation and an electrical signal from the at least one sensor element of the first type and the plurality of sensor elements of the second type. The sensor elements of the second type provide information about the location of the impact.

According to one preferred embodiment of the invention a plurality of dome shaped cavities is formed in the first foam element. Each of the dome shaped cavities defines an apex and is open to the second foam element. One single sensor element, which is a piezoelectric sensor element, of the plurality of sensor elements of the second type is attached to the apex. The at least one sensor element of the first type of the sensor is supported by the second foam element of the carrier. In the embodiment as discussed here the domes are oriented towards the direction of impact. According to another embodiment, the domes can be oriented with the apex pointing toward a structural element (cross member) of the vehicle.

According to one possible embodiment of the invention the impact detection sensor, configured for use and mounting in a vehicle, comprises the carrier with the enclosed impact detection sensor, which is surrounded by a sealing. The sealing has at one end a welded end and at an opposite end the sealing is attached to an inner wall of a housing (end cap). According to a preferred embodiment the sealing can be attached to the inner wall of the housing with a glue. The housing is closed at one end by the sealing, which is attached to the inner wall of the housing, and at the other end by a connector.

A printed circuit board is placed inside the housing. The first amplifier and the second amplifier are realized on the printed circuit board. The one sensor element of the first type is connected by a wiring to the first amplifier and the plurality of sensor elements of the second type are connected by a wiring to the second amplifier.

According to a preferred embodiment the second amplifier has four channels and the wiring for the plurality of sensor elements of the second type is such that the plurality of sensor elements of the second type are grouped and connected to the four channels. The first amplifier and the second amplifier are connected to a digital interface, which is a digital, two-wire interface for sensors in vehicle electronics. According to a preferred embodiment, the first amplifier, the second amplifier and the digital interface are realized by an ASIC.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings explain the principles of the disclosure. The mentioned numbers of the sensor elements of the first type and the sensor elements of the second type are utilised to explain the invention and should not be regarded as a limiting factor of the invention.

### Brief description of the drawings

The numerous advantages of the disclosure may be better understood by those skilled in the art by reference to the accompanying figures in which:
**FIG. 1** shows a prior art impact detection sensor for an impact protection system.
**FIG. 2** shows an impact detection sensor for an impact protection system with two different types of sensor elements according to a further embodiment of the invention.
**FIG. 3** shows an impact detection sensor for an impact protection system with two different types of sensor elements according to the embodiment of Fig. 2 but with a different wiring.
**FIG. 4** shows an impact detection sensor for an impact protection system with two different types of sensor elements according to the embodiment of Fig. 2 but with another embodiment of the wiring.
**FIG. 5** shows an impact detection sensor for an impact protection system with two different types of sensor elements according to the embodiment of Fig.2 but with a further embodiment of the wiring.
**FIG. 6** shows an impact detection sensor for an impact protection system with two different types of sensor elements according to the embodiment of Fig. 2 but with a further embodiment of the wiring.
**FIG. 7** shows a schematic view of a carrier for the embedded impact detection sensor.
**FIG. 8** shows a cross section of the carrier along line B-B of Fig 7.
**FIG. 9** shows a cross section of another embodiment of the carrier along line B-B of Fig 7.
**FIG. 10** shows a partial view of the impact detection sensor layered between a first and a second element of the carrier.
**FIG. 11** shows an embodiment of the formation of the carrier which houses the piezoelectric sensor elements and the capacitive sensor element.
**FIG. 12** shows an enlarged view of the placement of a piezoelectric sensor element within the carrier.
**FIG. 13** shows an enlarged view of the deformation of the dome shaped cavity due to an occurred collision which causes a sensing signal by the piezoelectric sensor element.
**FIG. 14** shows a schematic, partial view of the arrangement of the capacitive sensor elements and the piezoelectric sensor elements.
**FIG. 15** shows a schematic, partial view of another embodiment of the arrangement of the capacitive sensor elements and the piezoelectric sensor elements.
**FIG. 16** shows an embodiment of the arrangement of at least one sensor element of the first type (capacitive sensor element) in the carrier.
**FIG. 17** shows the effect of a collision on the capacitive sensor element in the carrier.
**FIG. 18** shows the effect of a collision on the capacitive sensor element according to the arrangement shown in the embodiment of Fig. 16.
**FIG. 19** shows a schematic side view of the integration of the impact detection sensor in a sensor device.
**FIG. 20** shows a schematic top view of the integration of the impact detection sensor in the sensor device of Fig. 19.
**FIG. 21** shows a detailed view of the mounting the impact detection sensor to the housing.
**FIG. 22** shows a schematic view of the arrangement of the components of the system according to one embodiment.
**FIG. 23** shows a schematic view of the placement of the electronics in relation to the impact detection sensor.
**FIG. 24** shows an alternative embodiment of the inventive impact detection sensor.
**FIG. 25** shows a schematic view of a further embodiment of the placement of the electronics in relation to the inventive impact detection sensors.
**FIG. 26** shows a schematic view of an additional embodiment of the placement of the electronics in relation to the inventive impact detection sensors.
**FIG. 27** shows a schematic view of an additional embodiment of the placement of electronics in relation to the impact detection of inventive sensors.

### Detailed description

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

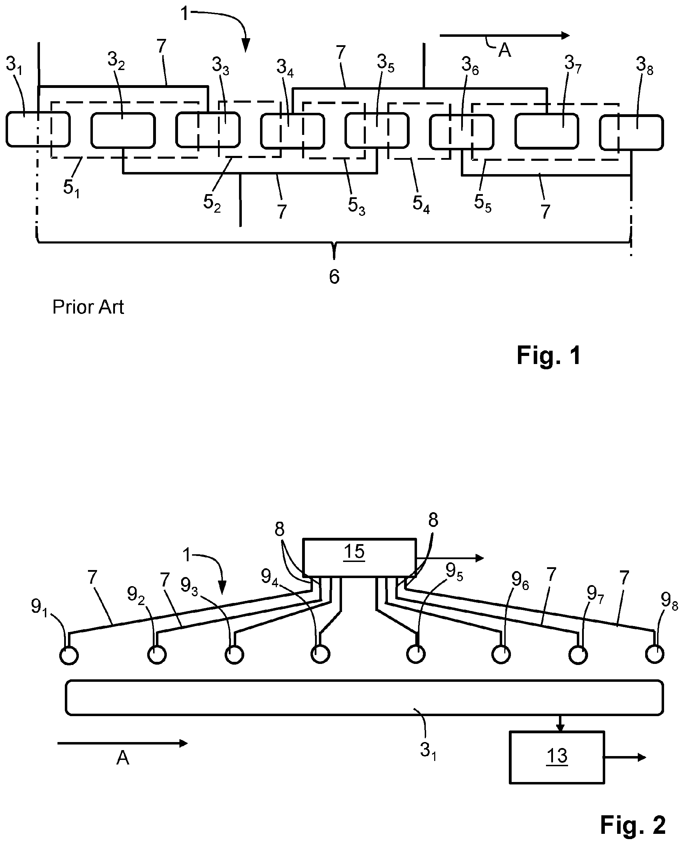

**FIG. 1** shows an impact detection sensor 1 for an impact detection and protection system according to the prior art. The impact detection sensor 1 comprises a plurality of sensor elements 3₁, 3₂,...,3_{M} of a first type, arranged along an axis A of the impact detection sensor 1. The sensor elements 3₁, 3₂,...,3_{M} of the first type are capacitive sensor elements. In the embodiment shown here eight sensor elements 3₁, 3₂,...,3₈ are arranged along an axis A of the impact detection sensor 1. The eight sensor elements 3₁, 3₂,...,3₈ are connected by a wiring 7 so that the first sensor element 3₁ and the third sensor element 3₃, the second sensor element 3₂ and the fifth sensor element 3₅, the fourth sensor element 3₄ and the seventh sensor element 3₇, and the sixth sensor element 3₆ and the eighth sensor element 3₈ are connected electronically. This results in five different zones 5₁, 5₂,..., 5₅ which provide five different and distinct areas of impact. With the wiring 7 mentioned above the sensor 1 defines an effective range 6 along the axis A of the impact detection sensor 1 with a redundancy effect. The redundancy effect means that always two sensor elements 3₁, 3₂,..., 3₈ per zone 5₁, 5₂,..., 5₅ are affected at the occurrence of an impact.

The **Figures 2** to **6** show various embodiments of an impact detection sensor 1 for an impact detection and protection system. It is to be understood that the number of the sensor elements 3₁, 3₂,...,3_{M} of a first type and the number of the sensor elements 9₁, 9₂,...,9_{O} of a second type mentioned in the specification below are exemplary and explanatory only and are not necessarily restrictive of the invention as claimed. Figures 2 - 6 are incorporated in and constitute a part of the specification, illustrate embodiments of the invention and together with the general description, explain the principles of the invention.

**Figure 2** shows a further embodiment of a impact detection sensor 1 for an impact detection and protection system with one sensor element 3₁ of a first type and eight sensor elements 9₁, 9₂,... ,9₈ of a second type. The sensor elements 9₁, 9₂,...,9₈ of the second type are arranged along the axis A of the impact detection sensor 1. The sensor element 3₁ of the first type is a capacitive sensor element and electrically connected by a wiring 7 to a first amplifier 13. The first amplifier 13 amplifies a signal (change of capacity due to an impact) from the capacitive sensor element. The eight sensor elements 9₁, 9₂,...,9₈ of the second type are piezoelectric sensor elements, which are electrically connected by a wiring 7 to an second amplifier 15. Consequently, the first amplifier 13 receives eight channels 8. The second amplifier 15 amplifies a signal (change of electric charge due to an impact) from each piezoelectric sensor element. In case of an impact the eight sensor elements 9₁, 9₂,...,9₈ of the second type provide a spatial resolution with regard to the location of impact.

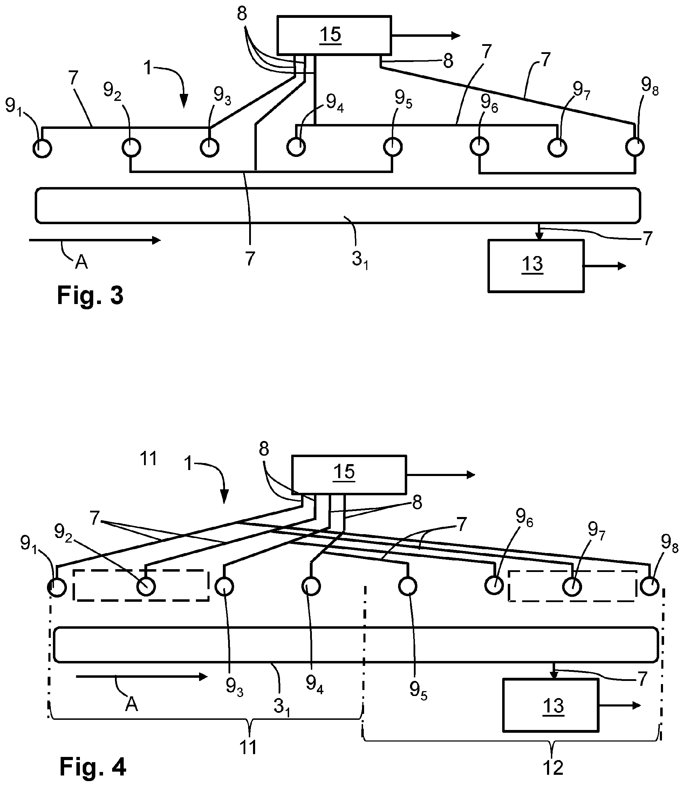

**Figure 3** shows another embodiment of an impact detection sensor 1 for an impact detection and protection system with one sensor element 3₁ of a first type and eight sensor elements 9₁, 9₂,... ,9₈ of a second type. The sensor elements 9₁, 9₂,...,9₈ of the second type are arranged along the axis A of the sensor 1. The sensor element 3₁ of the first type is a capacitive sensor element and the eight sensor elements 9₁, 9₂,...,9₈ of the second type are piezoelectric sensor elements. The eight sensor elements 9₁, 9₂,...,9₈ of the second type are electrically connected by a wiring 7 to an second amplifier 15. The second amplifier 15 has four channels 8. The wiring 7 (grouping) is such that the first sensor element 9₁ and the third sensor element 9₃ are connected to the first channel 8, the second sensor element 9₂ and the fifth sensor element 9₅ are connected to the second channel 8, the fourth sensor element 9₄ and the seventh sensor element 9₇ are connected to the third channel 8 and the sixth sensor element 9₆ and eighth sensor element 9₈ are connected to the fourth channel 8. The second amplifier 15 amplifies a signal (change of electric charge due to an impact) from each piezoelectric sensor element. The embodiment shown here has the advantage of a reduced wiring 7. In case of an impact the eight sensor elements 9₁, 9₂,...,9₈ of the second type provides a location resolution (left, right or middle of the sensor 1) with regard to the location of impact.

**Figure 4** shows another embodiment of an impact detection sensor 1 for an impact detection and protection system which provides location detection of an impact by a variant of the redundancy. The basic construction of the impact detection sensor 1 is the same as shown in Fig. 2 and 3. The difference is in the wiring 7. The eight sensor elements 9₁, 9₂,... ,9₈ of the second type are electrically connected by the wiring 7 to the second amplifier 15. The second amplifier 15 has four channels 8. The wiring 7 (grouping) is such that the first sensor element 9₁ and the eighth sensor element 9₈ are connected to the first channel 8, the second sensor element 9₂ and the seventh sensor element 9₇ are connected to the second channel 8, the third sensor element 9₃ and the sixth sensor element 9₆ are connected to the third channel 8 and the fourth sensor element 9₄ and the fifth sensor element 9₅ are connected to the fourth channel 8. The amplifier 15 amplifies a signal (change of electric charge due to an impact) from each piezoelectric sensor element. The embodiment shown here has the advantage of a reduced wiring 7. In case of an impact the eight sensor elements 9₁, 9₂,...,9₈ of the second type provide a location resolution with regard to the location of impact. There is no possibility to discriminate between a left area 11 and a right area 12 of the impact detection sensor 1.

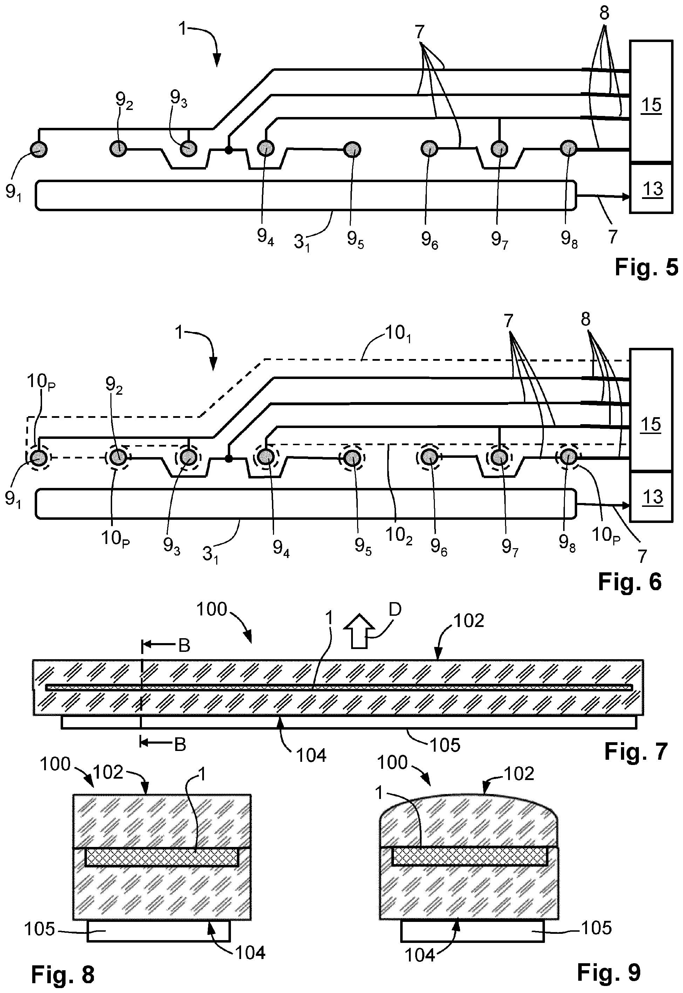

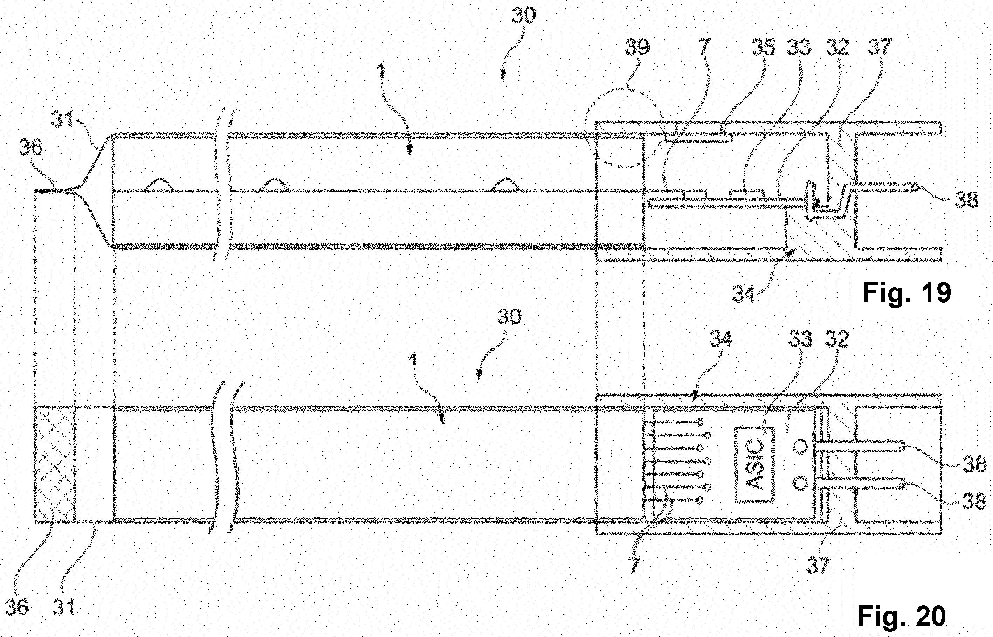

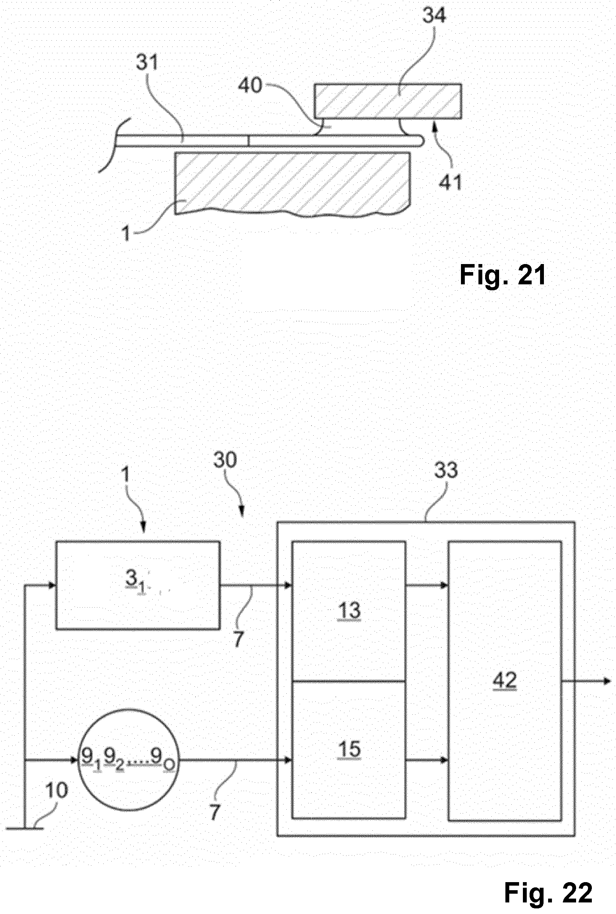

**Figure 5** shows an embodiment of the impact detection sensor 1 for an impact detection and protection system which is like the embodiment of Fig. 2. The embodiment shown here differs from the embodiment of Fig. 2 in that the first amplifier 13 for the capacitive sensor element 3₁ and the second amplifier 15 for piezoelectric sensor elements 9₁ to 9₈ are combined in one printed circuit board 32 (see Fig. 20 and 21). The printed circuit board 32 (side mounted electronics) is provided at one end of sensor 1. This arrangement simplifies the wiring 7 to the first amplifier 13 for the capacitive sensor element 3₁ and the second amplifier 15 for piezoelectric sensor elements 9₁ to 9₈. As known from the embodiment of Fig. 3 the second amplifier 15 for piezoelectric sensor elements has 4 channels.

**Figure 6** shows a variant of the embodiment of the impact detection sensor 1 for an impact detection and protection system as shown in Fig. 6. Each of the eight sensor elements 9₁, 9₂,...,9₈ of the second type (piezoelectric sensor elements) is provided with a ground 10_{P}. The ground 10_{P} of the first, second and third sensor element 9₁, 9₂, and 9₃ of the second type is connected to a first ground 10₁. The ground 10_{P} of the fourth, fifth, sixth, seventh and eighth sensor element 9₄, 9₅, 9₆, 9₇ and 9₈ of the second type is connected to a second ground 10₂. The first ground 10₁ and the second ground 10₂ are connected to the second amplifier 15 for piezoelectric sensor elements.

**Figure 7** shows a schematic view of a carrier 100 for the impact detection sensor 1. The impact detection sensor 1 is sandwiched between a first foam element 102 and a second foam element 104. The first foam element 102 and the second foam element 104 are arranged such that the impact detection sensor 1 is completely enclosed within the first foam element 102 and the second foam element. At least the second foam element 104 has a flat outline for mechanical integration. For example, the carrier 100 is mounted with the second foam element 104 to a structural element 105 of a vehicle (not shown). The first foam element 102 faces into a driving direction D of the vehicle.

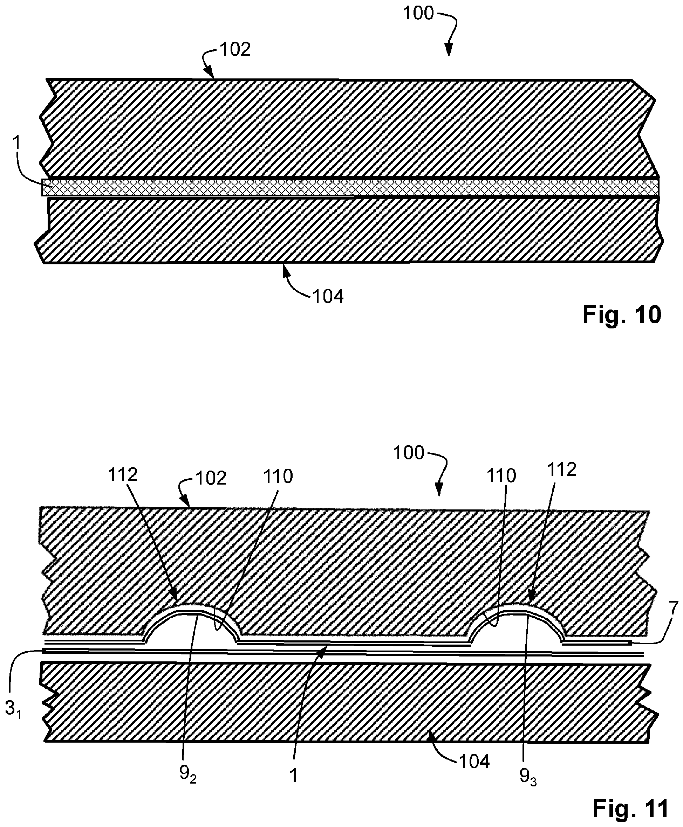

**Figure 8** and **9** show various embodiments of the carrier 100 for the sensor 1 taken along the section B-B of Figure 8. The impact detection sensor 1 is completely enclosed by the first foam element 102 and the second foam element 104. The first foam element 102 of the carrier 100 shown in Fig. 9 has a flat surface, pointing in the driving direction D (see Fig. 8). The first foam element 102 of the carrier 100 shown in Fig. 10 has a curved surface, pointing in the driving direction D (see Fig. 8). It is to be understood that the design of the surface, pointing in the driving direction D, is not limited to the structures shown in Fig. 9 and 10. The variation of the design of carrier 100 depends on the size and the height of the impact detection sensor 1 to be enclosed.

**Figure 10** shows a partial view of the impact detection sensor 1 layered between a first foam element 102 and a second foam element 104 of the carrier 100. As mentioned above, the impact detection sensor 1 comprises one the sensor element 3₁of a first type (here not shown) and a plurality of sensor elements 9₁, 9₂,...,9_{O} of a second type (here not shown). The impact detection sensor 1 is sandwiched between the first foam element 102 and the second foam element 104.

**Figure 11** shows a partial cross-sectional view of an embodiment of the formation of the carrier, which houses the piezoelectric sensor elements and the capacitive sensor element. The first foam element 102 has a plurality of dome shaped cavities 110, wherein the sensor elements 9₁, 9₂,...,9_{O} of the second type (piezoelectric sensor elements) are placed in the apex 112 of each dome shaped cavity 110. The wiring 7 for the sensor elements 9₁, 9₂,...,9_{O} of the second type are as well arranged between the first foam element 102 and the second foam element 104. A single sensor element 3₁ of the first type (capacitive sensor element) is placed as well between the first foam element 102 and the second foam element 104.

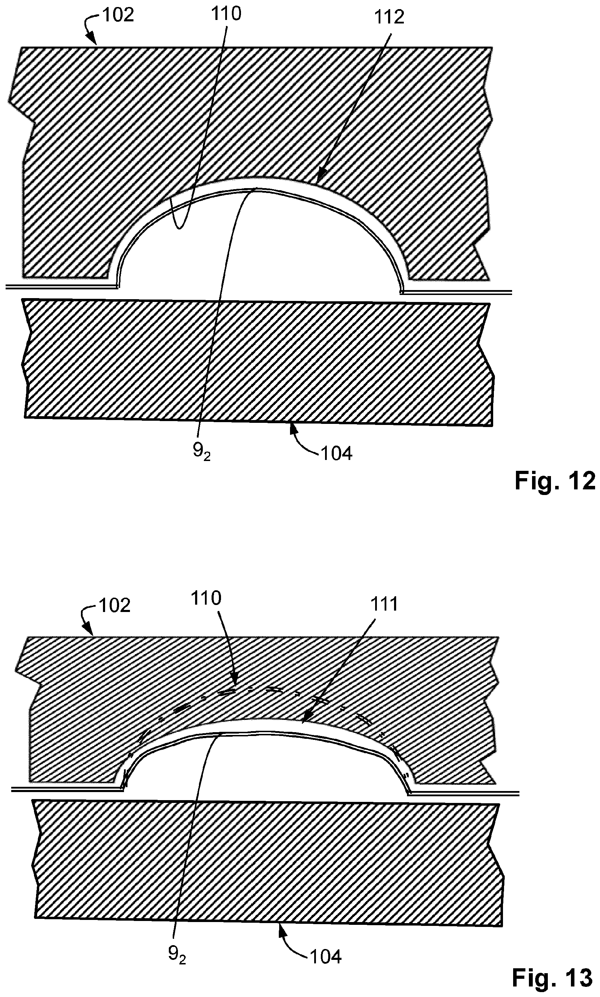

**Figure 12** shows an enlarged view of the placement of a piezoelectric sensor element (sensor elements 9₁, 9₂,..., 9_{O} of the second type) within the carrier 100. The sensor element 9₂, of the second type is placed in the apex 112 of the not deformed dome shaped cavity 110. The deformed state, due to a collision, is shown in **Figure 13****.** A collision of the vehicle (not shown) causes the not deformed dome shaped cavity 110 to be transferred to a deformed dome shaped cavity 111. The deformed dome shaped cavity 111 causes a deformation of the piezoelectric sensor element (sensor element 9₂ of the second type) within the deformed dome shaped cavity 111. The deformation causes a voltage signal in the piezoelectric sensor element which is sensed by the amplifier 15 (see Figures 2-6) for the piezoelectric sensor element.

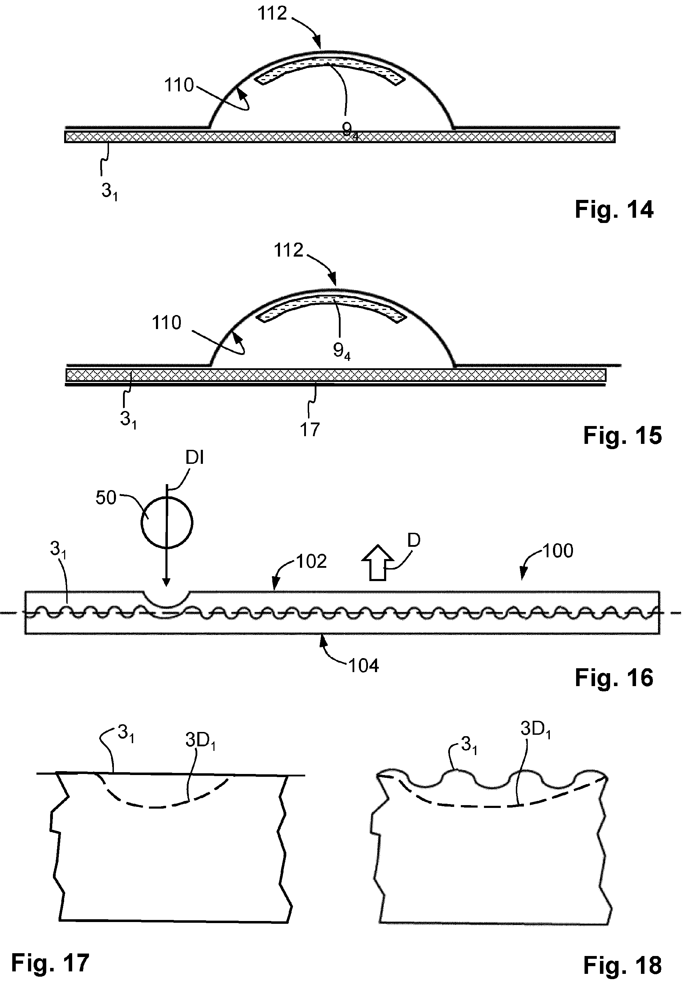

**Figure 14** shows a schematic, partial view of the arrangement of the one sensor element 3₁ of the first type (capacitive sensor elements; electrodes) and of the sensor element 9₄ of the second type (piezoelectric sensor element). The piezoelectric sensor element is placed in the apex 112 of the dome shaped cavity 110. Another embodiment of the arrangement of the one sensor element 3₁ of the first type (capacitive sensor elements, electrodes) and of the sensor elements 9₄ of the second type (piezoelectric sensor element) is shown in **Figure 15****.** Here the piezoelectric sensor element is placed in the apex 112 of the dome shaped cavity 110. The one sensor element 3₁ of the first type (capacitive sensor elements, electrodes) is covered by a sealing layer 17.

**Figure 16** shows an embodiment of the arrangement of at least one sensor element 3₁ of the first type (capacitive sensor element) inside carrier 100. The sensor element 3₁ of the first type is arranged in an undulating manner between the first foam element 102 and the second foam element 104. An object 50 deforming at least the first foam element 102 in the impact direction DI causes a mechanical strain on the at least one sensor element 3₁ of the first type.

**Figure 17** shows the effect of a collision on the sensor element 3₁ of the first type (capacitive sensor element) in carrier 100 (see for example Fig 7). The one sensor element 3₁ of the first type is provided in a not undulating manner. An impact of an object 50 (see Fig. 16) causes a strained sensor element 3D₁ of the first type. The strain might cause a rupture of the strained sensor element 3D₁ of the first type, which results in a malfunction of the impact detection sensor 1. The effect of a collision on an undulated sensor element 3₁ of the first type (capacitive sensor element) according to the arrangement shown in the embodiment of Fig. 16 is shown in **Figure 18****.** A collision here causes less strain on the sensor element 3₁ of the first type than in the example of Fig. 17.

**Figure 19** shows a schematic side view and **Figure 20** shows a schematic top view of the integration of the impact detection sensor 1 in a sensor device 30 which is ready to use in a vehicle (not shown). The impact detection sensor 1 is enclosed in a sealing 31, which seals the sensor and the associated electronics (for example, sensor 1) against the influence of humidity and/or dirt and provides an electromagnetic shielding for the electronics. Opposite to a welded end 36 of the sealing 31 the sensor 1 is attached to a housing 34 and connected by the required wiring 7 to a printed circuit board 32. The printed circuit board 32 encompasses the first amplifier 13 for capacitive sensor elements (not shown here) and the second amplifier 15 for piezoelectric sensor elements (not shown here). More precisely, the amplifiers 13 and 15 are realised by an ASIC 33 on the printed circuit board 32. The printed circuit board 32 is enclosed in the housing 34, which is closed at one end by a connector 37 and on the opposite end by the impact detection sensor 1. A pressure equalizing system 35 is provided to keep the pressure inside the housing 34 approximately at a constant level. The connector 37 has connector pins 38 which provide an electrical connection to a control system (not shown) of the vehicle. The carrier 100 with the enclosed impact detection sensor 1 is surrounded by a sealing 31. At one end the sealing is closed by a welded end 36 and at an opposite end the sealing 31 is attached to an inner wall 41 of the housing 34.

**Figure 21** is an enlarged view of the area marked with a dashed circle 39 in Fig. 19. The sensor 1 is fixed to housing 34. The sealing 31 is attached by one side to the sensor 1 and by the opposite side to the housing 34. The attachment of the sealing 31 to the housing 34 is achieved with a glue 40. In the embodiment shown here the sealing 31 is attached to an inner wall 41 of the housing 34.

**Figure 22** shows a schematic view of the arrangement of the components of the sensor device 30. The one sensor element 3₁ of a first type (capacitive sensor element) of the inventive sensor 1 are connected with a wiring 7 to the first amplifier 13 and the sensor elements 9₁, 9₂,...,9_{O} of a second type (piezoelectric sensor elements) of the inventive sensor 1 are connected with a wiring 7 to the second amplifier 15. Additionally, the one sensor element 3₁, of the first type and the sensor elements 9₁, 9₂,...,9_{O} of the second type are connected to a common ground 10. The first amplifier 13 for capacitive sensor element and the second amplifier 15 for piezoelectric sensor elements is realized on one chip, for example the ASIC 33. Both amplifiers 13 and 15 are connected to a digital interface 42 which is a digital, two-wire interface 42 for sensors in vehicle electronics.

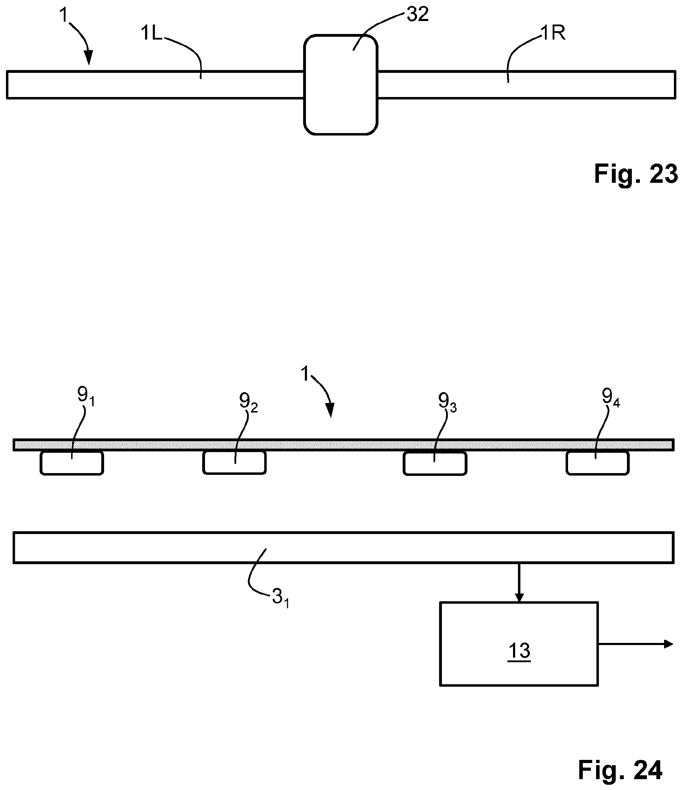

**Figure 23** shows a schematic view of the placement of the printed circuit board 32 (electronics) in relation to the impact detection sensor 1. The printed circuit board 32 is placed in the middle of the impact detection sensor 1 so that the impact detection sensor 1 has a left sensor 1L and a right sensor 1R.

**Figure 24** shows an alternative embodiment of the inventive sensor 1. The inventive impact detection sensor 1 comprises one sensor element 3₁ of a first type and a plurality of sensor elements 9₁, 9₂,...,9_{O} of a second type which are accelerometers. The accelerometers of the impact detection sensor 1 are placed close to the bumper (not shown) of the vehicle.

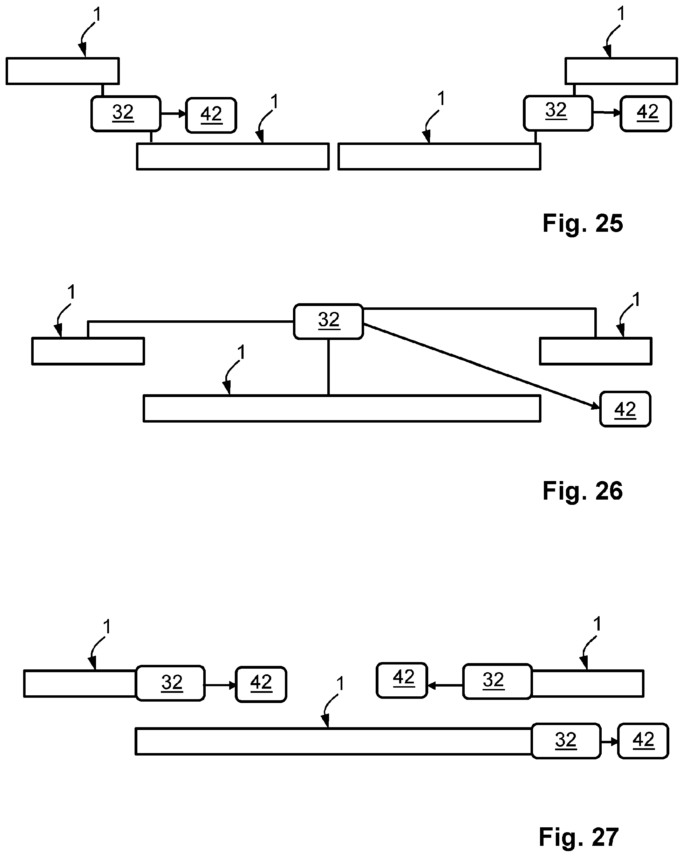

**Figure 25** shows a schematic view of a further embodiment of the placement of the printed circuit boards 32 (electronics) in relation to the inventive impact detection sensors 1. Four individual impact detection sensors 1 are arranged symmetrically, wherein two of the four impact detection sensors 1 are connected to one printed circuit board 32. Each of the two printed circuit boards 32 is connected to a respective digital interface 42.

**Figure 26** shows a schematic view of an additional embodiment of the placement of the printed circuit board 32 (electronics) in relation to the inventive impact detection sensors 1. Three individual impact detection sensors 1 are arranged such that the three impact detection sensors 1 are connected to a single common printed circuit board 32. The printed circuit board 32 is connected to a digital interface 42.

**Figure 27** shows a schematic view of an additional embodiment of the placement of printed circuit boards 32 (electronics) in relation to three individual inventive impact detection sensors 1. Each individual impact detection sensor 1 is connected to a respective printed circuit board 32. Each of the three printed circuit boards 32 is connected to a digital interface 42.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention is limited only by the claims appended hereto.

### List of reference numerals

- 1: Impact detection Sensor
- 1L: Left sensor
- 1R: Right sensor
- 3: Sensor element of a first type
- 5₁, 5₂,...,5_{N}: Zone
- 6: Effective range
- 7: Wiring
- 8: Channel
- 9₁, 9₂,...,9_{O}: Sensor element of a second type
- 10: Common ground
- 10₁: First ground
- 10₂: Second ground
- 10p: Ground piezoelectric elements
- 11: Left area
- 12: Right area
- 13: First amplifier
- 15: Second amplifier
- 17: Sealing layer
- 30: Sensor device
- 31: Sealing
- 32: Printed circuit board
- 33: ASIC
- 34: Housing
- 35: Pressure equalizing system
- 36: Welded end
- 37: Connector
- 38: Connector pin
- 39: Circle
- 40: Glue
- 41: Inner wall
- 42: Digital interface
- 50: Object
- 100: Carrier
- 102: First foam element
- 104: Second foam element
- 105: Structural element
- 110: Dome shaped cavity
- 111: Deformed dome shaped cavity
- 112: Apex
- A: Axis
- B-B: Section
- D: Driving direction
- DI: Impact direction

## Claims

1. An impact detection sensor (1) for a vehicle, wherein the impact detection sensor (1) comprises
• a first amplifier (13) and a second amplifier (15);
• a sensor element (3₁) of a first type, which is a capacitive sensor, oriented along the axis (A) of the impact detection sensor (1) and being connected to the first amplifier (13);
• a plurality of sensor elements (9₁, 9₂,...,9_{O}), which are piezoelectric sensor elements, force sensitive sensor elements or accelerometers, of a second type, oriented and uniformly distributed along the axis (A) of the sensor (1) and being connected in pairs to the second amplifier (15);
• a carrier (100) comprising a first foam element (102) and a second foam element (104),
o wherein the sensor element (3₁) of the first type and the plurality of sensor elements (9₁, 9₂,...,9_{O}) of the second type are sandwiched between the first foam element (102) and the second foam element (104), and
∘ wherein the sensor element (3₁) of the first type is supported by the second foam element (104) of the carrier (100) and wherein a wiring (7) for the sensor elements (9₁, 9₂,...,9_{O}) of the second type is as well arranged between the first foam element (102) and the second foam element (104); and
• a housing (34) of the impact detection sensor (1) enclosing a printed circuit board (31), which encompasses the first amplifier (13), which is electrically connected by the wiring (7) to the sensor element (3₁), and the second amplifier (15) , which is electrically connected by the wiring (7) to the plurality of sensor elements (9₁, 9₂,...,9_{O}).

2. The impact detection sensor (1) as claimed in claim 1, wherein the sensor element (3₁) of the first type is used for a verification of the impact and the plurality of sensor elements (9₁, 9₂,...,9_{O}) of the second type provide a location resolution of the location of the impact.

3. The impact detection sensor (1) as claimed in any of the preceding claims, wherein the plurality of sensor elements (9₁, 9₂,...,9_{O}) of the second type is a mixture of the piezoelectric sensor elements, force sensitive sensor elements or accelerometers.

4. The impact detection sensor (1) as claimed in claim 1 or 2, wherein the plurality of sensor elements (9₁, 9₂,...,9_{O}) of the second type are piezoelectric sensor elements.

5. The impact detection sensor (1) as claimed in any of the preceding claims, wherein the plurality of sensor elements (9₁, 9₂,...,9_{O}) of the second type encompasses eight sensor elements (9₁, 9₂,...,9_{O}) of the second type.

6. The impact detection sensor (1) as claimed any of the preceding claims, wherein the second amplifier (15) has four channels (8) and the wiring (7) for the plurality of sensor elements (9₁, 9₂,...,9_{O}) of the second type is such that the plurality of sensor elements (9₁, 9₂,...,9_{O}) of the second type are grouped and connected to the four channels (8).

7. The impact detection sensor (1) as claimed in claim 6, wherein the impact detection sensor (1) is enclosed in a sealing (31) with one welded end (36) and wherein the impact detection sensor (1) is attached at an opposite end to an inner wall (41) of the housing (34).

8. The impact detection sensor (1) as claimed in claim 7, wherein the first amplifier (13) and the second amplifier (15) are combined in one printed circuit board (32) which is enclosed in the housing (34) and the impact detection sensor (1) is connected to the first amplifier (13) and the second amplifier (15) by the required wiring (7).

9. The impact detection sensor (1) as claimed in claim 7, wherein the sealing (31) is attached with a glue (40) to an inner wall (41) of the housing (34).

10. A system using four individual impact detection sensors (1) as claimed in any of the preceding claims, wherein the four individual impact detection sensors (1) are arranged symmetrically, wherein two of the four impact detection sensors (1) are connected to one printed circuit board (32) and each of the two printed circuit boards (32) is connected to a respective digital interface (42).

11. A system using three individual impact detection sensors (1) as claimed in any of the preceding claims 1 to 9, wherein the three individual impact detection sensors (1) are arranged such that the three impact detection sensors (1) are connected to a single common printed circuit board (32), which is connected to a digital interface (42).

12. A system using three individual impact detection sensors (1) as claimed in any of the preceding claims 1 to 9, wherein the three individual inventive impact detection sensors (1) are arranged such that each of the three impact detection sensors (1) is connected to a respective printed circuit board (32) and each of the three printed circuit boards (32) is connected to a digital interface (42).

## Patentansprüche

1. Ein Aufprallerkennungssensor (1) für ein Fahrzeug, wobei der Aufprallerkennungssensor (1) umfasst
• einen ersten Verstärker (13) und einen zweiten Verstärker (15);
• ein Sensorelement (3₁) eines ersten Typs, das ein kapazitiver Sensor ist und entlang der Achse (A) des Aufprallerkennungssensors (1) ausgerichtet ist und mit dem ersten Verstärker (13) verbunden ist;
• eine Vielzahl von Sensorelementen (9₁, 9₂,..., 9_{O}), die piezoelektrische Sensorelemente, kraftempfindliche Sensorelemente oder Beschleunigungsmesser sind, eines zweiten Typs, die entlang der Achse (A) des Sensors (1) ausgerichtet und gleichmäßig verteilt sind und paarweise mit dem zweiten Verstärker (15) verbunden sind;
• einen Träger (100), der ein erstes Schaumstoffelement (102) und ein zweites Schaumstoffelement (104) umfasst,
∘ wobei das Sensorelement (3₁) des ersten Typs und die Vielzahl von Sensorelementen (9₁, 9₂,..., 9₀) des zweiten Typs zwischen dem ersten Schaumstoffelement (102) und dem zweiten Schaumstoffelement (104) eingeklemmt sind, und
∘ wobei das Sensorelement (3₁) des ersten Typs durch das zweite Schaumstoffelement (104) des Trägers (100) gestützt wird und wobei eine Verdrahtung (7) für die Sensorelemente (9₁, 9₂,..., 9_{O}) des zweiten Typs ebenfalls zwischen dem ersten Schaumstoffelement (102) und dem zweiten Schaumstoffelement (104) angeordnet ist; und
• ein Gehäuse (34) des Aufprallerkennungssensors (1), das eine Leiterplatte (31) umschließt, welche den ersten Verstärker (13) umschließt, der über die Verdrahtung (7) mit dem Sensorelement (3₁) elektrisch verbunden ist, und den zweiten Verstärker (15), der über die Verdrahtung (7) mit der Vielzahl von Sensorelementen (9₁, 9₂,..., 9_{O}) elektrisch verbunden ist.

2. Der Aufprallerkennungssensor (1) nach Anspruch 1, wobei das Sensorelement (3₁) des ersten Typs zur Verifizierung des Aufpralls verwendet wird und die Vielzahl von Sensorelementen (9₁, 9₂,..., 9_{O}) des zweiten Typs eine Ortungsauflösung des Aufprallortes bereitstellen.

3. Der Aufprallerkennungssensor (1) nach einem der vorstehenden Ansprüche, wobei die Vielzahl von Sensorelementen (9₁, 9₂,..., 9_{O}) des zweiten Typs eine Mischung aus piezoelektrischen Sensorelementen, kraftempfindlichen Sensorelementen oder Beschleunigungssensoren ist.

4. Der Aufprallerkennungssensor (1) nach Anspruch 1 oder 2, wobei die Vielzahl von Sensorelementen (9₁, 9₂,..., 9_{O}) des zweiten Typs piezoelektrische Sensorelemente sind .

5. Der Aufprallerkennungssensor (1) nach einem der vorstehenden Ansprüche, wobei die Vielzahl von Sensorelementen (9₁, 9₂,..., 9_{O}) des zweiten Typs acht Sensorelemente (9₁, 9₂,..., 9_{O}) des zweiten Typs umfasst.

6. Der Aufprallerkennungssensor (1) nach einem der vorstehenden Ansprüche, wobei der zweite Verstärker (15) vier Kanäle (8) aufweist und die Verdrahtung (7) für die Vielzahl von Sensorelementen (9₁, 9₂,..., 9_{O}) des zweiten Typs derart ist, dass die Vielzahl von Sensorelementen (9₁, 9₂,..., 9_{O}) des zweiten Typs gruppiert und mit den vier Kanälen (8) verbunden sind.

7. Der Aufprallerkennungssensor (1) nach Anspruch 6, wobei der Aufprallerkennungssensor (1) in einer Dichtung (31) mit einem verschweißten Ende (36) eingeschlossen ist und wobei der Aufprallerkennungssensor (1) an einem gegenüberliegenden Ende an einer Innenwand (41) des Gehäuses (34) befestigt ist.

8. Der Aufprallerkennungssensor (1) nach Anspruch 7, wobei der erste Verstärker (13) und der zweite Verstärker (15) in einer Leiterplatte (32) kombiniert sind, die in dem Gehäuse (34) untergebracht ist, und der Aufprallerkennungssensor (1) über die erforderliche Verdrahtung (7) mit dem ersten Verstärker (13) und dem zweiten Verstärker (15) verbunden ist.

9. Der Aufprallerkennungssensor (1) nach Anspruch 7, wobei die Dichtung (31) mit einem Klebstoff (40) an einer Innenwand (41) des Gehäuses (34) befestigt ist.

10. Ein System, das vier einzelne Aufprallerkennungssensoren (1) gemäß einem der vorstehenden Ansprüche verwendet, wobei die vier einzelnen Aufprallerkennungssensoren (1) symmetrisch angeordnet sind, wobei zwei der vier Aufprallerkennungssensoren (1) mit einer Leiterplatte (32) verbunden sind und jede der beiden Leiterplatten (32) mit einer jeweiligen digitalen Schnittstelle (42) verbunden ist.

11. Ein System, das drei einzelne Aufprallerkennungssensoren (1) gemäß einem der vorstehenden Ansprüche 1 bis 9 verwendet, wobei die drei einzelnen Aufprallerkennungssensoren (1) so angeordnet sind, dass die drei Aufprallerkennungssensoren (1) mit einer einzigen gemeinsamen Leiterplatte (32) verbunden sind, die mit einer digitalen Schnittstelle (42) verbunden ist.

12. Ein System, das drei einzelne Aufprallerkennungssensoren (1) gemäß einem der vorstehenden Ansprüche 1 bis 9 verwendet, wobei die drei einzelnen erfindungsgemäßen Aufprallerkennungssensoren (1) so angeordnet sind, dass jeder der drei Aufprallerkennungssensoren (1) mit einer jeweiligen Leiterplatte (32) verbunden ist und jede der drei Leiterplatten (32) mit einer digitalen Schnittstelle (42) verbunden ist.

## Revendications

1. Un capteur de détection d'impact (1) pour un véhicule, dans lequel le capteur de détection d'impact (1) comprend
• un premier amplificateur (13) et un deuxième amplificateur (15) ;
• un élément capteur (3₁) d'un premier type, qui est un capteur capacitif, orienté le long de l'axe (A) du capteur de détection d'impact (1) et connecté au premier amplificateur (13) ;
• une pluralité d'éléments capteurs (9₁ , 9₂ ,..., 9_{O}), qui sont des éléments capteurs piézoélectriques, des éléments capteurs sensibles à la force ou des accéléromètres, d'un deuxième type, orientés et répartis uniformément le long de l'axe (A) du capteur (1) et connectés par paires au deuxième amplificateur (15) ;
• un support (100) comprenant un premier élément en mousse (102) et un deuxième élément en mousse (104),
∘ dans lequel l'élément capteur (3₁) du premier type et la pluralité d'éléments capteurs (9₁, 9₂, ..., 9₀) du deuxième type sont pris en sandwich entre le premier élément en mousse (102) et le deuxième élément en mousse (104), et
∘ dans lequel l'élément capteur (3₁) de du premier type est supporté par le deuxième élément en mousse (104) du support (100) et dans lequel un câblage (7) pour les éléments capteurs (9₁ , 9₂ ,..., 9_{O}) du deuxième type est également disposé entre le premier élément en mousse (102) et le deuxième élément en mousse (104) ; et
• un boîtier (34) du capteur de détection d'impact (1) renfermant une carte de circuit imprimé (31), qui comprend le premier amplificateur (13), lequel est relié électriquement par le câblage (7) à l'élément capteur (3₁), et le deuxième amplificateur (15), qui est relié électriquement par le câblage (7) à la pluralité d'éléments de capteur (9₁ , 9₂, 9_{O}).

2. Le capteur de détection d'impact (1) selon la revendication 1, dans lequel l'élément capteur (3₁) du premier type est utilisé pour une vérification de l'impact et la pluralité d'éléments capteurs (9₁ , 9₂ ,..., 9_{O}) du second type fournissent une résolution spatiale de l'emplacement de l'impact.

3. Le capteur de détection d'impact (1) selon l'une quelconque des revendications précédentes, dans lequel la pluralité d'éléments de capteur (9₁, 9₂, ..., 9_{O}) du deuxième type est un mélange d'éléments de capteur piézoélectriques, d'éléments de capteur sensibles à la force ou d'accéléromètres.

4. Le capteur de détection d'impact (1) selon la revendication 1 ou 2, dans lequel la pluralité d'éléments de capteur (9₁ , 9₂ ,..., 9_{O}) du deuxième type sont des éléments de capteur piézoélectriques.

5. Le capteur de détection d'impact (1) selon l'une quelconque des revendications précédentes, dans lequel la pluralité d'éléments de capteur (9₁ , 9₂ ,..., 9_{O}) du deuxième type comprend huit éléments de capteur (9₁ , 9₂ ,..., 9_{O}) du deuxième type.

6. Le capteur de détection d'impact (1) selon l'une quelconque des revendications précédentes, dans lequel le deuxième amplificateur (15) comporte quatre canaux (8) et le câblage (7) pour la pluralité d'éléments de capteur (9₁ , 9₂ ,..., 9_{O}) du deuxième type est tel que la pluralité d'éléments de capteur (9₁ , 9₂ ,..., 9_{O}) du deuxième type sont regroupés et connectés aux quatre canaux (8).

7. Le capteur de détection d'impact (1) selon la revendication 6, dans lequel le capteur de détection d'impact (1) est logé dans une étanchéité (31) comportant une extrémité soudée (36) et dans lequel le capteur de détection d'impact (1) est fixé, à une extrémité opposée, à une paroi interne (41) du boîtier (34).

8. Le capteur de détection d'impact (1) selon la revendication 7, dans lequel le premier amplificateur (13) et le deuxième amplificateur (15) sont combinés sur une seule carte de circuit imprimé (32) qui est logée dans le boîtier (34) et le capteur de détection d'impact (1) est connecté au premier amplificateur (13) et au deuxième amplificateur (15) par le câblage nécessaire (7).

9. Capteur de détection d'impact (1) selon la revendication 7, dans lequel l'étanchéité (31) est fixée à l'aide d'une colle (40) à une paroi intérieure (41) du boîtier (34).

10. Un système utilisant quatre capteurs individuels de détection d'impact (1) selon l'une quelconque des revendications précédentes, dans lequel les quatre capteurs individuels de détection d'impact (1) sont disposés symétriquement, dans lequel deux des quatre capteurs de détection d'impact (1) sont connectés à une carte de circuit imprimé (32) et chacune des deux cartes de circuit imprimé (32) est connectée à une interface numérique respective (42).

11. Un système utilisant trois capteurs de détection d'impact individuels (1) selon l'une quelconque des revendications 1 à 9 précédentes, dans lequel les trois capteurs de détection d'impact individuels (1) sont agencés de telle sorte que les trois capteurs de détection d'impact (1) sont connectés à une seule carte de circuit imprimé commune (32), qui est connectée à une interface numérique (42).

12. Un système utilisant trois capteurs de détection d'impact individuels (1) selon l'une quelconque des revendications 1 à 9 précédentes, dans lequel les trois capteurs de détection d'impact individuels (1) selon l'invention sont agencés de telle sorte que chacun des trois capteurs de détection d'impact (1) est connecté à une carte de circuit imprimé respective (32) et que chacune des trois cartes de circuit imprimé (32) est connectée à une interface numérique (42).
